# EUROPÄISCHE PATENTSCHRIFT

(11) **EP 2 983 836 B1**
(45) Veröffentlichungstag und Bekanntmachung des Hinweises auf die Patenterteilung: **15.03.2017**
(21) Anmeldenummer: 14707318.3
(22) Anmeldetag: 29.01.2014
(51) Int. Cl.: B05D 1/04, B05D 3/04, B05D 1/06, B05D 1/12, B05D 7/00, C03C 17/00, C03C 17/30, C03C 17/34, C08J 7/04, C09D 183/06, C09D 183/08, C08G 77/14, C08G 77/26, B05D 7/02

(54) **VERFAHREN ZUM PULVERLACKIEREN EINES KUNSTSTOFF- ODER GLASGEGENSTANDES**
METHOD FOR POWDER COATING A PLASTIC OR GLASS OBJECT
PROCÉDÉ PERMETTANT DE RECOUVRIR D'UNE LAQUE EN POUDRE UN OBJET EN MATIÈRE PLASTIQUE OU EN VERRE

(30) Priorität: 08.04.2013 DE 102013005990; 18.09.2013 DE 102013015448; 17.10.2013 DE 102013017267
(43) Veröffentlichungstag der Anmeldung: 17.02.2016
(73) Patentinhaber: Hochschule Offenburg, 77652 Offenburg (DE); Schneider Oberlächentechnik GmbH, 77933 Lahr (DE)
(72) Erfinder: SCHNEIDER, Harald, 77767 Appenweier (DE); VINKE, Johannes, 77652 Offenburg (DE); RUSTAM, Lina, 77652 Offenburg (DE)
(74) Vertreter: Müller-Boré & Partner Patentanwälte PartG mbB
(86) Internationale Anmeldenummer: PCT/EP2014/000243
(87) Internationale Veröffentlichungsnummer: WO 2014/166562

(56) Entgegenhaltungen:
- WO-A1-01/07513
- US-A1- 2003 180 551

## Beschreibung

Die vorliegende Erfindung betrifft ein Verfahren zum Pulverlackieren eines Kunststoff- oder Glasgegenstandes.

Industrielle elektrostatische Pulverlackierverfahren finden vorwiegend in der Sanitär- und Haushaltsgerätetechnik, im Heizkörperbau, für Fassadenbeschichtungen, für Möbellackierungen und in der Automobilindustrie Anwendung. Das Pulverbeschichten oder Pulverlackieren ist ein Beschichtungsverfahren, in dem ein elektrisch leitfähiger Werkstoff unter Zuhilfenahme elektrostatischer Anziehungskräfte mit Pulverlack beschichtet wird. Gängige Pulverlacke enthalten Polymerharze, beispielsweise Epoxid- und/oder Polyesterharze, sowie Farbstoffe/Pigmente und Additive.

In gängigen Pulverlackierverfahren wird der Pulverlack, häufig unter Zuhilfenahme einer Corona- oder Tribobehandlung, elektrostatisch aufgeladen. Der zu beschichtende Gegenstand - gewöhnlich ein Metall - wird geerdet, wodurch auf dem Gegenstand eine Spiegelladung erzeugt wird. Die geladenen Pulverlackteilchen werden mithilfe von Druckluft in Richtung des Gegenstandes beschleunigt. Durch elektrostatische Anziehungskräfte bleibt ein gewisser Anteil der Pulverlackteilchen, die auf die Oberfläche des Gegenstandes treffen, dort haften.

Schwierigkeiten ergeben sich insbesondere bei Gegenständen ohne oder mit nur geringer Leitfähigkeit, wie beispielsweise Kunststoffgegenstände, Gegenstände aus Holz-Kunststoff-Verbundwerkstoffen oder Glasgegenstände, da dort aufgrund der geringen elektrostatischen Kräfte die Pulverlackpartikel nur unzureichend auf dem Gegenstand haften und somit nicht in ausreichender Schichtdicke aufgetragen werden können. Es wurde in der Vergangenheit vorgeschlagen, zunächst durch Auftragen einer Beschichtung mit einem leitfähigen Zusatz die elektrostatischen Kräfte zwischen der Oberfläche eines derartigen Gegenstandes und den Pulverlackteilchen zu erhöhen. Ein leitfähiger Zusatz kann in Wasser oder einem organischen Lösemittel löslich sein. Beispiele hierfür sind vor allem ionische Verbindungen, beispielsweise anorganische Salze wie Natriumchlorid. Leitfähige Zusätze können auch unlösliche Feststoffteilchen mit verschiedenen Formen und Größen sein. Derartige leitfähige Zusätze umfassen Metalle, wobei das Metall aus jedem beliebigen leitfähigen Metall, wie beispielsweise Silber, Kupfer oder Eisen, Aluminium, Chrom, Zinn, Nickel, Titan und deren Gemische, ausgewählt sein kann, Metall(misch)oxide, wie beispielsweise Indiumzinnoxid (ITO, In₂O₃:Sn), Aluminiumzinkoxid (AZO, ZnO:Al), Antimonzinnoxid (ATO, SnO₂:Sb), mit Fluor dotiertes Zinnoxid (FTO, SnO₂:F), Zinnoxid, Antimonpentoxid, intermetallische Verbindungen wie Boride und Carbide, sowie leitfähiger Kohlenstoff, wie beispielsweise Graphit, Kohlenstofffasern, Kohlenstoffnanofasern und/oder Kohlenstoffnanoröhren.
Derartige Beschichtungen, die einen leitfähigen Zusatz enthalten, weisen jedoch häufig Nachteile bezüglich der Haftung und/oder Gleichmäßigkeit der resultierenden Beschichtung, Brillianz und/oder Farbeigenschaften der resultierenden Pulverlackierung auf.

EP 1 361 257 A1 und US 2003/180551 A1 beschreiben jeweils ein Pulverlackierverfahren für Gegenstände mit geringer Leitfähigkeit. !n dem Verfahren wird ein Pulverlack verwendet, der einen elektrisch leitfähigen Zusatz enthält, wodurch verbesserte Beschichtungseigenschaften des Pulverlacks erzielt werden. Darin sind Maßnahmen zur Erhöhung der elektrischen Leitfähigkeit der Oberfläche eines zu beschichtenden Gegenstandes nicht vorgesehen. Ein Nachteil dieses Verfahrens besteht darin, dass die Verwendung eines leitfähigen Zusatzes kostenintensiv und mit einem verfahrenstechnischen Mehraufwand verbunden ist.
EP 2 450 109 A1 beschreibt ein Pulverlackierverfahren, worin ein Gegenstand in einem ersten Schritt auf eine Temperatur erwärmt wird, wobei die Temperatur über dem Schmelzpunkt eines in einem zweiten Schritt aufgetragenen Pulverlacks liegt, wodurch eine klebrige Oberfläche ausgebildet wird. In einem weiteren Schritt wird die Pulverlackierung durch Anwenden von Infrarotstrahlung gehärtet. Auf die Zugabe eines leitfähigen Zusatzes wird verzichtet. Die Haftung des Pulverlacks auf dem Substrat erfolgt durch eine Art Schmelzklebung des Pulverlacks auf dem erwärmten Gegenstand und nicht durch elektrostatische Anziehungskräfte.

Somit liegt der vorliegenden Erfindung die Aufgabe zugrunde, ein neuartiges Verfahren zum Pulverlackieren eines Kunststoff- oder Glasgegenstandes, das kostengünstig, umweltfreundlich und einfach in bestehende Produktionsabläufe zu integrieren ist, und durch das ohne Verwendung eines leitfähigen Zusatzes eine Pulverlackierung mit hoher Qualität erzeugt werden kann, bereitzustellen.

Diese Aufgabe wird durch die in den Ansprüchen gekennzeichneten Ausführungsformen gelöst.

Insbesondere wird ein Verfahren zum Pulverlackieren eines Kunststoff- oder Glasgegenstandes bereitgestellt, umfassend die Schritte:
das Ausbilden einer polaren Beschichtung auf dem Kunststoff- oder Glasgegenstand,
umfassend die Teilschritte des Alterns einer Beschichtungszusammensetzung für eine Dauer von mindestens 12 Stunden und des Aufbringens der Beschichtungszusammensetzung auf den Kunststoff- oder Glasgegenstand, das Aufbringen eines Pulverlacks auf den derartig beschichteten Kunststoff- oder Glasgegenstand und das Erwärmen des Pulverlacks auf eine Temperatur von 100 bis 250°C,
wobei die Beschichtungszusammensetzung ein Organosiloxan, das mindestens zwei Si-O-Bindungen aufweist, Wasser, ein organisches Lösemittel und ein pHregulierendes Mittel, ausgewählt aus einer Brönsted-Säure, in einer katalytischen Menge enthält, mit der Maßgabe, dass die Beschichtungszusammensetzung keinen elektrisch leitfähigen Zusatz, ausgewählt aus ionischen Verbindungen, Metallen, Metall(misch)oxiden, intermetallischen Verbindungen und leitfähigem Kohlenstoff, enthält.

Der Kunststoff- oder Glasgegenstand, der dem erfindungsgemäßen Verfahren unterzogen wird, unterliegt keiner besonderen Einschränkung.

Erfindungsgemäß umfasst der Begriff Glasgegenstand nicht nur Gegenstände, die ausschließlich aus einem Glas bestehen, sondern auch Verbundwerkstoffe, die zumindest teilweise aus Glas bestehen. Beispiele für Glasgegenstände, die sich für das erfindungsgemäße Verfahren zum Pulverlackieren eignen, sind unter anderem Flachglas, Haushaltsgläser wie Wein- und andere Trinkgefäße, Kannen, Vasen und dergleichen. Die Zusammensetzung des in dem Glasgegenstand enthaltenen Glases unterliegt keiner besonderen Einschränkung. Gläser, die für das erfindungsgemäße Verfahren geeignet sind, können aus einer Vielzahl verschiedener Glassorten gefertigt sein, wie beispielsweise Borosilikatglas, Quarzglas, Kronglas, Kalk-Natron-Glas, Floatglas, Flintglas, Bleikristallglas, Kristallglas und Glaskeramiken wie beispielsweise Ceran^{®}.

Obwohl mit dem erfindungsgemäßen Verfahren bevorzugt nicht leitfähige Glasgegenstände pulverlackiert werden, können ebenso leitfähige Glasgegenstände (beispielsweise Indiumzinnoxid(ITO)-beschichtetes Glas) verwendet werden. Wie vorstehend ausgeführt, wird im erfindungsgemäßen Verfahren vor dem Aufbringen eines Pulverlacks eine Beschichtung mit erhöhter Polarität auf dem Glasgegenstand erzeugt. Dies ist selbst bei Glasgegenständen mit einer gewissen elektrischen Leitfähigkeit vorteilhaft, da durch das Ausbilden der polaren Beschichtung die (Oberflächen-)Polarität des Glasgegenstandes erhöht werden kann. Hierbei werden unter leitfähigen Glasgegenständen solche mit einem spezifischen Oberflächenwiderstand von nicht mehr als 10¹³ Ωm verstanden. Die Leitfähigkeit der aufzutragenden, ausreichende (Oberflächen-)Polarität hervorrufenden, erfindungsgemäß vorgesehenen Beschichtungsmasse beträgt etwa 2µS/cm (gemessen mit einer Leitfähigkeitselektrode). Der Widerstand wäre demnach 5 x 10⁹ Ωm.

Vor dem Aufbringen der Beschichtungszusammensetzung kann die Oberfläche des Glasgegenstandes gegebenenfalls vorbehandelt werden. Die Oberfläche des Glasgegenstandes kann dabei vorzugsweise durch ein Reinigungsverfahren, beispielsweise durch Ultraschall, wäßrige Tensidlösungen, Lösungsmittel, Lösungsmittelmischungen oder CO₂-Behandlung, vorbehandelt werden. Durch eine größtmögliche Reinheit der Oberfläche des Glasgegenstandes wird eine gute Haftung der Beschichtung, und daraus resultierend eine gleichmäßige Pulverlackierung mit fester Haftung und hoher Beständigkeit sichergestellt. Weitere Vorbehandlungsmaßnahmen sind Beflammen, Ätzen, Aufrauhen oder Tempern (beispielsweise ∼70°C/24h).

Erfindungsgemäß umfasst der Begriff Kunststoffgegenstand nicht nur Gegenstände, die ausschließlich aus einem Kunststoff bestehen, sondern auch Verbundwerkstoffe, wie beispielsweise Holz-Kunststoff-Verbundwerkstoffe. Der Kunststoffgegenstand umfasst einen oder mehrere Kunststoffe, und gegebenenfalls Kunststoffe mit weiteren Komponenten aus Metall, Holz und anderen gängigen Werkstoffen. Beispiele für Kunststoffgegenstände, die sich für das erfindungsgemäße Verfahren zum Pulverlackieren eignen, sind unter anderem Griffe, Heizungen, Spielzeug, Sportgeräte, Automobilinnenverkleidungen, etc. Der in dem Kunststoffgegenstand enthaltene Kunststoff unterliegt keiner besonderen Einschränkung und umfasst organische Polymere und/oder Copolymere, sowie Blends daraus. Bevorzugt umfasst der Kunststoffgegenstand mindestens ein organisches Polymer, ausgewählt aus der Gruppe, bestehend aus Polyamid, Polyurethan, Polyethylenterephthalat, Polyolefin, Polystyrol, Acrylnitril-Butadien-Styrol-Terpolymer (ABS), Polybutylenterephthalat (PBT), Polyethylenterephthalat (PET), Polycarbonat (PC), Polyoxymethylen (POM), Polyvinylchlorid (PVC) und Polymethylmethacrylat (PMMA) sowie Blends daraus, wobei der Kunststoff gegebenenfalls ein kohlefaser- und/oder graphit- und/oder glasfaserverstärkter Kunststoff sein kann.

Obwohl mit dem erfindungsgemäßen Verfahren bevorzugt nicht leitfähige Kunststoffgegenstände pulverlackiert werden, können ebenso leitfähige Kunststoffgegenstände verwendet werden. Wie bereits vorstehend ausgeführt, wird im erfindungsgemäßen Verfahren vor dem Aufbringen eines Pulverlacks eine Beschichtung mit erhöhter Polarität auf dem Kunststoffgegenstand erzeugt. Dies ist selbst bei Kunststoffgegenständen mit einer gewissen elektrischen Leitfähigkeit vorteilhaft, da durch das Ausbilden der polaren Beschichtung die (Oberflächen-)Polarität des Kunststoffgegenstandes erhöht werden kann. Hierbei wird unter leitfähigen Kunststoffgegenständen solche mit einem spezifischen Oberflächenwiderstand von nicht mehr als 10¹³ Ωm verstanden. Die Leitfähigkeit der aufzutragenden, ausreichende(Oberflächen-)Polarität hervorrufenden, erfindungsgemäß vorgesehenen Beschichtungsmasse beträgt etwa 2µS/cm (gemessen mit einer Leitfähigkeitselektrode). Der Widerstand wäre demnach 5 x 10⁹ Ωm.

Der im Kunststoffgegenstand enthaltene Kunststoff kann sowohl ein wärmeempfindlicher Kunststoff, als auch ein wärmestabiler Kunststoff sein. Hierbei gelten Kunststoffe mit einer Glasübergangstemperatur Tg von -20°C bis zu einer Schmelztemperatur Tm von 250°C als wärmeempfindlich. Bei Verwendung eines wärmeempfindlichen Kunststoff(gegenstand)s erfolgt im erfindungsgemäßen Verfahren der Schritt des Erwärmens des Pulverlacks vorzugsweise im Niedertemperaturbereich von 120°C bis 150°C. Darüber hinaus wird bei Verwendung eines wärmeempfindlichen Kunststoffgegenstandes vorzugsweise ein Pulverlack verwendet, der bereits bei einer Temperatur von mindestens 120°C vernetzbar ist. Beim Pulverlackieren wird das Vernetzen des Pulverlacks auch als Einbrennen bezeichnet.

Vor dem Aufbringen der Beschichtungszusammensetzung kann die Oberfläche des Kunststoffgegenstandes gegebenenfalls vorbehandelt werden. Die Oberfläche des Kunststoffgegenstandes kann dabei vorzugsweise durch ein Reinigungsverfahren, beispielsweise durch Ultraschall, wäßrige Tensidlösungen, Lösungsmittel, Lösungsmittelmischungen oder CO₂-Behandlung, vorbehandelt werden. Durch eine größtmögliche Reinheit der Oberfläche des Kunststoffgegenstandes wird eine gute Haftung der Beschichtung, und daraus resultierend eine gleichmäßige Pulverlackierung mit fester Haftung und hoher Beständigkeit sichergestellt. Weitere Vorbehandlungsmaßnahmen sind Beflammen, Aufrauhen oder Tempern (beispielsweise ∼70°C/24h).

Der Schritt des Ausbildens einer ausreichend polaren Beschichtung auf dem Kunststoff- oder Glasgegenstand umfasst zwei Teilschritte: Altern der Beschichtungszusammensetzung für eine Dauer von mindestens 12 Stunden, vorzugsweise 24 Stunden, mehr bevorzugt 48 Stunden, und Aufbringen der Beschichtungszusammensetzung auf den Kunststoff- oder Glasgegenstand.

Erfindungsgemäß umfasst die verwendete Beschichtungszusammensetzung ein Organosiloxan, das mindestens zwei Si-O-Bindungen aufweist, Wasser, ein organisches Lösemittel und ein pH-regulierendes Mittel, ausgewählt aus einer Brönsted-Säure, in einer katalytischen Menge, mit der Maßgabe, dass die Beschichtungszusammensetzung keinen elektrisch leitfähigen Zusatz, ausgewählt aus ionischen Verbindungen, Metallen, Metall(misch)oxiden, intermetallischen Verbindungen und leitfähigem Kohlenstoff, enthält. Unter einem elektrisch leitfähigen Zusatz werden solche ionischen Verbindungen, Metalle, Metall(misch)oxide, intermetallischen Verbindungen und leitfähiger Kohlenstoff verstanden, wie eingangs ausgeführt, d.h. Metalle, wie beispielsweise Silber, Kupfer oder Eisen, Aluminium, Chrom, Zinn, Nickel, Titan und deren Gemische, Metall(misch)oxide, wie beispielsweise Indiumzinnoxid (ITO, In₂O₃:Sn), Aluminiumzinkoxid (AZO, ZnO:Al), Antimonzinnoxid (ATO, SnO₂:Sb), mit Fluor dotiertes Zinnoxid (FTO, SnO₂:F), Zinnoxid, Antimonpentoxid, intermetallische Verbindungen wie Boride und Carbide, sowie leitfähiger Kohlenstoff, wie beispielsweise Graphit, Kohlenstofffasern, Kohlenstoffnancfasern und/oder Kohlenstoffnanoröhren. Vorzugsweise enthält die Beschichtungszusammensetzung mehr als 1 bis weniger als 3 mol, bezogen auf 1 mol Si-Atome des Organosiloxans, Wasser (d. h. 1 < r < 3, siehe unten), 10 bis 50 Gewichtsteile, besonders bevorzugt 20 bis 40 Gewichtsteile, bezogen auf 100 Gewichtsteile des Organosiloxans, organisches Lösemittel und 0,001 bis 0,1 mol, besonders bevorzugt 0,003 bis 0,05 mol, bezogen auf 1 mol Si-O-Bindungen des Organosiloxans, pH-regulierendes Mittel. Die Beschichtungszusammensetzung liegt zu Beginn des Alterns vorzugsweise in Form einer Lösung vor.

Das Altern der Beschichtungszusammensetzung unterliegt keiner besonderen Einschränkung und erfolgt für eine Dauer von mindestens 12 Stunden, vorzugsweise mindestens 24 Stunden, besonders bevorzugt mindestens 48 Stunden, beispielsweise mindestens 4 oder 5 Tage. Das Altern wird vorzugsweise unter Normalbedingungen durchgeführt. Während des Alterns findet in der Beschichtungszusammensetzung (die auch als "Sol" bezeichnet werden kann) eine mehrstufige Polykondensationsreaktion unter Ausbildung eines Polyorganosiloxans statt. Derartige Reaktionen werden allgemein als Sol-Gel-Prozesse bezeichnet. Dabei kann die Beschichtungszusammensetzung bei fortgeschrittener oder abgeschlossener Polykondensationsreaktion als "Gel" bezeichnet werden. Der Ausbildung des Polyorganosiloxans aus dem Organosiloxan liegen im Wesentlichen drei Gleichgewichtsreaktionen zugrunde: Hydrolyse/Veresterung, Alkohol-Kondensation/Alkoholyse und Wasser-Kondensation/Hydrolyse. Durch Hydrolyse von Si-O-Alkyl-Bindungen entstehen Si-OH-Gruppen, die anschließend Kondensationsreaktionen ermöglichen. Bei Alkohol- und Wasser-Kondensation werden Si-O-Si-Gruppen ausgebildet. Setzen sich Alkohol- und Wasser-Kondensation fort, werden Polyorganosiloxane gebildet. Eine erhöhte Konzentration der Si-OH-Gruppen in der Beschichtungszusammensetzung führt zu einer polaren Beschichtung auf dem Glasgegenstand, die aufgrund einer erhöhten (Oberflächen)Polarität verbesserte Pulverbeschichtungseigenschaften, insbesondere eine verbesserte Haftung des Pulverlacks auf dem Kunststoff- oder Glasgegenstand liefert. Die Konzentration der Si-OH-Gruppen korreliert mit der (Oberflächen)Polarität der Beschichtung, insofern die Konzentration der Si-OH-Gruppen in der Beschichtungszusammensetzung mit zunehmender Dauer des Alterungschritts ansteigt.

Das Stoffmengenverhältnis von Wassermolekülen zu Si-Atomen (H₂O:Si) in der Beschichtungszusammensetzung wird als r-Wert bezeichnet. Bei unterstöchiometrischen Reaktionen (r < 2) erfolgt bevorzugt Alkohol-Kondensation statt Wasser-Kondensation, bei überstöchiometrischen Reaktionen (r > 2) erfolgt bevorzugt Wasser-Kondensation statt Alkohol-Kondensation. Hinzu kommt, dass ein hoher r-Wert den Sol-Gel-Prozess beschleunigt. Allerdings ist bei r ≥ 3 eine ausreichende Benetzbarkeit der Oberfläche des Glasgegenstandes nicht mehr gewährleistet, weshalb vorzugsweise r < 3 ist. Besonders bevorzugt ist 1,2 ≤ r < 2,0, insbesondere bevorzugt 1,5 ≤ r ≤ 1,7. Liegt r innerhalb der genannten Bereiche, ist nicht nur eine ausreichende Benetzbarkeit der Oberfläche des Glasgegenstandes gewährleistet, sondern auch die Alkohol-Kondensation gefördert, wohingegen die Wasser-Kondensation unterdrückt ist. Bei der Wasser-Kondensation entstehendes Wasser ist insbesondere für den späteren Schritt des Aufbringens des Pulverlacks von Nachteil. Zudem führt eine Verschiebung des Gleichgewichts des Reaktionspaars Alkohol-Kondensation/Alkoholyse zu Gunsten der Alkoholyse zu einer erhöhten Konzentration an Si-OH-Gruppen, was für die Pulverlackiereigenschaften der polaren Beschichtung von Vorteil ist (Haftung des Pulverlacks aufgrund erhöhter (Oberflächen)Polarität).

Die gealterte Beschichtungszusammensetzung enthält ein Polyorganosiloxan, weiches Wiederhoiungseinheiten mit mindestens zwei Si-O-Bindungen (-[Si-O]ₙ-, wobei n eine ganze Zahl größer 1 ist) aufweist.

In einer bevorzugten Ausführungsform des erfindungsgemäßen Verfahrens umfasst die Beschichtungszusammensetzung ein Fließhilfsmittel. Vorzugsweise beträgt der Anteil des Fließhilfsmittels 90 - 50 Gew.-%, bevorzugt 80 - 60 Gew.-%, bezogen auf die Gesamtmasse/stoffmenge der Beschichtungszusammensetzung. Durch die Verwendung eines Fließhilfsmittels in der Beschichtungszusammensetzung kann die gewünschte Dicke der Schicht auf dem Kunststoff- oder Glasgegenstand, die von der Beschichtungszusammensetzung gebildet wird (Nassfilmdicke), eingestellt werden. Das Fließhilfsmittel unterliegt keiner besonderen Einschränkung. Beispiele für Fließhilfsmittel, die vorteilhaft in der Beschichtungszusammensetzung verwendet werden können, sind insbesondere Alkohole. Ein besonders bevorzugtes Fließhilfsmittel ist Ethanol.

In einer weiteren bevorzugten Ausführungsform enthält die Beschichtungszusammensetzung ein Verlaufshilfsmittel. Der Anteil des Verlaufshilfsmittels beträgt vorzugsweise 0,5 bis 10 Gew.-%, besonders bevorzugt 0,5 bis 5 Gew.-%. Als Verlaufshilfsmittel können beispielsweise Talkum, Feldspat und Kaolin verwendet werden, wobei bevorzugt Kaolin eingesetzt wird. Gelegentlich kann die polare Beschichtung Unregelmäßigkeiten der Beschichtungsdicke, die als Ränder oder Wulste sichtbar werden, aufweisen. Vor allem durch die Einwirkung der Schwerkraft nach Aufbringen der Beschichtungszusammensetzung können an der Unterseite des zu beschichtenden Gegenstandes solche Unregelmäßigkeiten auftreten. Durch das Hinzufügen eines Verlaufshilfsmittels zu der Beschichtungszusammensetzung kann diesem unerwünschten Effekt entgegengewirkt werden.

In dem erfindungsgemäßen Verfahren wird die Beschichtungszusammensetzung vorzugsweise in einer Schichtdicke von 15 µm bis 30 µm, besonders bevorzugt von 15 µm bis 25 µm, aufgetragen.

Das pH-regulierende Mittel wirkt in dem oben beschriebenen Sol-Gel-Prozess, der während des Alterns stattfindet, als Katalysator. Dadurch verkürzt sich die Dauer des Alterns, die notwendig ist, um eine polare Beschichtung mit ausreichend guten Pulverlackiereigenschaften zu erhalten. Im Allgemeinen kann ein Sol-Gel-Prozess auch ohne Katalysator durchgeführt werden. Allerdings würde dadurch eine Dauer des Alterns von mehr als einer Woche erforderlich, um eine leitfähige Beschichtung mit ausreichend guten Pulverlackiereigenschaften zu erhalten.

Die erfindungsgemäß verwendete Beschichtungszusammensetzung enthält keinen elektrisch leitfähigen Zusatz. Wie bereits vorstehend erläutert, kann durch das Altern der Beschichtungszusammensetzung für eine Dauer von mindestens 12 Stunden gewährleistet werden, dass die resultierende polare Beschichtung hervorragende Beschichtungseigenschaften, insbesondere eine ausgezeichnete Haftung des Pulverlacks auf der Oberfläche der polaren Beschichtung des Kunststoff- oder Glasgegenstandes, aufweist. Durch mindestens zwölfstündiges Altern der Beschichtungszusammensetzung wird eine ausreichend polare Beschichtung mit hoher, für anschließendes Pulverlackieren geeigneter (Oberflächen)polarität bereitgestellt. Daher ist es nicht erforderlich, die Beschichtung weiter durch einen leitfähigen Zusatz für die nachfolgende Pulverlackbeschichtung zu konditionieren.

Da die allgemein verwendeten leitfähigen Zusätze gewöhnlich unlöslich sind, liegen Beschichtungszusammensetzungen, die derartige Zusätze enthalten, in der Regel als Dispersion (Suspension, Emulsion) vor. Häufig werden derartige Dispersionen durch ein Dispergiermittel (Suspensionsmittel, Emulgator) stabilisiert, da andernfalls die unlöslichen Teilchen (gewöhnlich Feststoffteilchen) sedimentieren würden oder anderweitig getrennte Phasen vorlägen. Im Gegensatz dazu liegt die erfindungsgemäß verwendete Beschichtungszusammensetzung (zumindest zu Beginn des Alterns) vorzugsweise in Form einer Lösung vor. Darüber hinaus enthält die erfindungsgemäß eingesetzte Beschichtungszusammensetzung vorzugsweise kein Dispergiermittel.

Das Organosiloxan, das mindestens zwei Si-O-Bindungen aufweist, unterliegt keiner besonderen Einschränkung. Durch das Vorhandensein von mindestens zwei Si-O-Bindungen wird gewährleistet, dass das Organosiloxan unter Bildung eines Polyorganosiloxans kondensieren kann. Bevorzugt weist das Organosiloxan vier, besonders bevorzugt drei Si-O-Bindungen auf. Die Si-O-Bindungen werden bevorzugt zwischen dem Siliciumatom (Si) und einem Substituenten -O-R ausgebildet, wobei R bevorzugt ausgewählt ist aus der Gruppe, bestehend aus einer Alkylgruppe mit 1 bis 6 Kohlenstoffatomen, einer Alkenylgruppe mit 1 bis 6 Kohlenstoffatomen, einer Alkinylgruppe mit 1 bis 6 Kohlenstoffatomen, einer Arylgruppe, einer Heteroarylgruppe, einer Acylgruppe mit 1 bis 6 Kohlenstoffatomen, einer Fluoralkylgruppe mit 1 bis 6 Kohlenstoffatomen und die Substituenten -O-R voneinander verschieden sein können. Bevorzugt ist R eine lineare Alkylgruppe mit 1 bis 4 Kohlenstoffatomen, besonders bevorzugt eine Ethyl- oder eine Prop-1-ylgruppe.

Unabhängig davon weist das Organosiloxan, beispielsweise in einem Rest R', so dass das Organosiloxan die Formel R'-Si(OR)₃ aufweist, vorzugsweise eine vernetzbare Gruppe auf, die besonders bevorzugt endständig ist. Durch das Vorhandensein einer vernetzbaren Gruppe kann die Beschichtungszusammensetzung neben der Ausbildung eines Polyorganosiloxans eine weitere Polymerstruktur ausbilden. Dadurch kann sowohl der polaren Beschichtung als auch der Pulverlackierung eine besondere Stabilität verliehen werden. Die vernetzbare Gruppe kann beispielsweise eine Epoxidgruppe, eine Acrylgruppe, eine Vinylgruppe, eine Allylgruppe oder eine Aminogruppe sein. Bevorzugt ist die vernetzbare Gruppe eine Epoxidgruppe. Der Rest R' ist bevorzugt ein Glycidyloxyalkylrest, beispielsweise ein Glycidyloxymethyl-, ein Glycidyloxyethyl-, ein Glycidyloxypropyl- oder ein Glycidyloxybutylrest, besonders bevorzugt ein Glycidyloxypropylrest. Gemäß der vorliegenden Erfindung bevorzugt verwendete Siloxane sind Glycidyloxyalkyltrialkoxysilane, beispielsweise Glycidyloxypropyltriethoxysilan.

Das erfindungsgemäß verwendete Wasser unterliegt keinen besonderen Einschränkungen. Bevorzugt ist das Wasser demineralisiert.

Das erfindungsgemäß verwendete organische Lösemittel unterliegt keinen besonderen Einschränkungen. Durch die Anwesenheit des Lösemittels in der Beschichtungszusammensetzung kann eine Phasentrennung, insbesondere in der Anfangszeit des Alterns, vermieden werden. Vorzugsweise ist das Lösemittel bei Normalbedingungen mit Wasser mischbar. Als Lösemittel können beispielsweise Aceton, Dialkylether (zum Beispiel Diethylether), Dimethylformamid, N-Methylpyrrolid-2-on, Essigsäureethylester, Benzol, n-Alkanole mit 1 bis 4 Kohlenstoffatomen oder Gemische davon verwendet werden. Bevorzugte Lösemittel sind Alkohole mit 1 bis 4 Kohlenstoffatomen, beispielsweise Ethanol, Propan-2-ol, Propan-1-ol, n-Butan-1-ol und Butan-2-ol. Ein besonders bevorzugtes Lösemittel ist Ethanol. Alkohole, insbesondere Ethanol, können insofern als Lösemittel wie auch als Fließhilfsmittel fungieren.

In einer bevorzugten Ausführungsform des erfindungsgemäßen Verfahrens weist das Organosiloxan drei identische Substituenten -O-R auf, wobei als Lösemittel der entsprechende Alkohol H-O-R verwendet wird. Entsprechend kann eine Kombination eines Organosiloxans R'-Si(OR)₃ mit einem organischen Lösemittel ROH verwendet werden, wobei R beispielsweise Methyl, Ethyl, Prop-1-yl, Prop-2-yl, n-But-1-yl oder But-2-yl sein kann. Bei dieser Ausführungsform ist R besonders bevorzugt Ethyl. Bei der Verwendung eines Alkohols als organisches Lösemittel kann es zu einer Umesterung des Alkohols mit der Gruppe -O-R des Organosiloxans kommen. Daraus eventuell resultierende unerwünschte Effekte können gemäß der vorstehend erläuterten bevorzugten Ausführungsform des erfindungsgemäßen Verfahrens ausgeschlossen werden.

Die erfindungsgemäß verwendete Beschichtungszusammensetzung enthält weiter eine Brönsted-Säure als pH-regulierendes Mittel. Beispiele für Brönsted-Säuren sind Salzsäure, Salpetersäure, Schwefelsäure, Essigsäure und Trifluoressigsäure. Der pH-Wert der Beschichtungszusammensetzung vor dem Altern liegt vorzugsweise zwischen 0,5 und weniger als 5, besonders bevorzugt zwischen 2 und 4 beispielsweise weist die Beschichtungszusammensetzung vor dem Altern einen pH-Wert von 1,5 auf. Für den Fall, dass das Organosiloxan eine Si-C-Bindung aufweist, ist ein saurer Katalysator von Vorteil, da in diesem Fall durch saure Katalyse die Dauer des Alterungsschritts weiter herabgesetzt werden kann als durch basische Katalyse.

Das Erscheinungsbild sowie die Elastizität der aufzubringenden Pulverlacke lässt sich durch Zugabe von Bisphenol A, insbesondere durch Zugabe von Bisphenol A in Kombination mit Histidin, zu der erfindungsgemäß eingesetzten Beschichtungszusammensetzung weiter verbessern.

Das Aufbringen der Beschichtungszusammensetzung unterliegt keiner besonderen Einschränkung und kann auf jede erdenkliche Weise erfolgen, beispielsweise durch Tauch-, Streich- und Sprühverfahren, Rake!n, Bedrucken, Rotationsbeschichten, (Spritz)lackieren, Schlitzdüsenbeschichten, Walzenbeschichten, Kaskaden- oder Vorhanggießen. Die Beschichtungszusammensetzung kann auch durch eine Kombination verschiedener Verfahren aufgebracht werden. Vorzugsweise wird die Beschichtungszusammensetzung durch Sprühen aufgebracht, da hierbei die Beschichtungszusammensetzung sehr gleichmäßig und mit einheitlicher Schichtdicke auf den Kunststoff- oder Glasgegenstand aufgebracht werden kann.

Das Altern der Beschichtungszusammensetzung setzt ein, sobald diese bereitgestellt, d.h. hergestellt, ist. Hinsichtlich einer einfachen und effizienten Prozessgestaltung ist es erfindungsgemäß vorteilhaft, das Altern der Beschichtungszusammensetzung bereits vor dem Aufbringen auf den Kunststoff- oder Glasgegenstand durchzuführen. Unter anderem wird dadurch auch die Gefahr einer möglichen Verunreinigung der Oberfläche des Kunststoff- oder Glasgegenstandes während des Alterns minimiert. Darüber hinaus ist es bei Durchführung des Alterns vor dem Aufbringen der Beschichtungslösung möglich, das erfindungsgemäße Verfahren effizient und in einem Zug durchzuführen.

Zwar ist auch ein einfaches Ablüften nach Auftragen der Beschichtung bei Raumtemperatur möglich, jedoch wird gemäß einer bevorzugten Ausführungsform der vorliegenden Erfindung nach dem Aufbringen und Altern der Beschichtungszusammensetzung und vor dem Aufbringen des Pulverlacks die Beschichtungszusammensetzung für eine Dauer von 5 Sekunden bis 10 Minuten auf eine Temperatur von 80 bis 150°C, vorzugsweise für eine Dauer von 30 Sekunden bis 5 Minuten auf eine Temperatur von 100 bis 140°C, beispielsweise für eine Dauer von 1 Minute auf eine Temperatur von 120°C, erwärmt. Das Erwärmen kann prinzipiell auf beliebige Weise erfolgen, beispielsweise durch Umluft, elektromagnetische Strahlung wie Infrarot- und/oder Laserstrahlung. Durch dieses Erwärmen wird verbliebenes Lösemittel und/oder Wasser zumindest teilweise aus der Beschichtung entfernt. Zusätzlich kann durch dieses Erwärmen die gegebenenfalls vorhandene vernetzbare Gruppe des (Poly)siloxans, wie beispielsweise eine Epoxidgruppe, vernetzt werden, wodurch eine höhere Stabilität der polaren Beschichtung und der Pulverlackierung erhalten werden kann.

Das Aufbringen des Pulverlacks unterliegt keiner besonderen Einschränkung und kann auf jede erdenkliche Weise erfolgen. Vorzugsweise wird der Pulverlack durch elektrostatisches Sprühen auf den beschichteten Kunststoff- oder Glasgegenstand aufgebracht. Das elektrostatische Sprühen erfolgt gewöhnlich mithilfe von Sprühpistolen, die Corona- oder Tribo-unterstützt arbeiten.

Der erfindungsgemäß verwendete Pulverlack unterliegt keiner besonderen Einschränkung. Pulverlacke umfassen normalerweise ein festes, thermoplastisches oder wärmehärtbares filmbildendes Polymerharz. Eine Vielzahl verschiedener Typen von thermoplastischen Harzen für Pulverlacke ist bekannt, beispielsweise Vinylchlorid, Polyamide, Polycellulosen, Polyolefine, Polyethylen und Polyester. Wärmehärtbare filmbildende Harze enthalten reaktive funktionelle Gruppen, gegebenenfalls ein optionales Härtungsmittel (Vernetzungsmittel) mit funktionellen Gruppen, die mit den funktionellen Gruppen des Polymerharzes reaktiv sind, und die selbst ein anderes filmbildendes Polymer sind, und gegebenenfalls einen Katalysator. Bekannte wärmehärtbare Harze umfassen säurefunktionelle Polyesterharze, säurefunktionelle Acrylsäureharze, Epoxidharze und Hydroxyfunktionelle Polyesterharze, sind aber nicht darauf beschränkt. Vorzugsweise weist der verwendete Pulverlack eine mittlere Teilchengröße, bestimmt durch Klassieren, von 0,5 bis 100 µm auf.

Gemäß der vorliegenden Erfindung können wärmehärtbare Pulverlacke verwendet werden, die bei geringer Temperatur härten. Pulverlacke, die bei geringen Temperaturen härten, härten im Allgemeinen bei Temperaturen von weniger als 170°C, vorzugsweise weniger als 150°C, am meisten bevorzugt weniger als 135°C. Beispiele für wärmehärtbare Pulverlacke, die bei geringer Temperatur härten, umfassen Epoxypulver und Epoxy-Polyester-Mischpulver, wie sie einem Fachmann bekannt sind.

Das Erwärmen des Pulverlacks unterliegt keinen besonderen Einschränkungen und kann auf gleiche oder verschiedene Weise wie das optionale Erwärmen der Beschichtungszusammensetzung erfolgen. Das Erwärmen des Pulverlacks kann prinzipiell auf beliebige Weise erfolgen, beispielsweise durch Umluft, elektromagnetische Strahlung wie Ultraviolett-, Infrarot- und/oder Mikrowellenstrahlung.

Gemäß einer bevorzugten Ausführungsform der Erfindung erfolgt das Erwärmen des Pulverlacks durch Umluft in einem Umluftofen. Durch einen Umluftofen kann einfach, kostengünstig und effizient ein großer Durchsatz an Glasgegenständen bearbeitet werden. Das Erwärmen im Umluftofen eignet sich besonders für Kunststoff- oder Glasgegenstände, die nicht wärmeempfindlich sind, kann aber auch gegebenenfalls für wärmeempfindliche Kunststoff- oder Glasgegenstände eingesetzt werden. Für den Fall wärmestabiler Kunststoff- oder Glasgegenstände wird der Pulverlack bevorzugt auf eine Temperatur von 150 bis 250°C, besonders bevorzugt 180 bis 220°C erwärmt.

Gemäß einer weiteren bevorzugten Ausführungsform der Erfindung erfolgt das Erwärmen des Pulverlacks durch Anwenden von Infrarot- und/oder Ultraviolettstrahlung. Durch derartiges Erwärmen des Pulverlacks kann dieser selektiv und schonend erwärmt werden, so dass sich der Kunststoff- oder Glasgegenstand, der sich unter dem Pulverlack befindet, weniger stark erwärmt als der Pulverlack. Das Erwärmen durch Infrarot- und/oder Ultraviolettstrahlung eignet sich besonders für Kunststoffgegenstände, die wärmeempfindlich sind. Für den Fall wärmeempfindlicher Kunststoffgegenstände wird der Pulverlack bevorzugt auf eine Temperatur von nicht mehr als 170°C, vorzugsweise nicht mehr als 150°C, besonders bevorzugt nicht mehr als 135°C erwärmt.

In einem weiteren Aspekt betrifft die vorliegende Erfindung einen pulverlackierten Kunststoff- oder Glasgegenstand, umfassend in dieser Reihenfolge von innen nach außen, einen Kunststoff- oder Glasgegenstand, eine polare Beschichtung, umfassend ein Polyorganosiloxan, welches Wiederholungseinheiten mit mindestens zwei Si-O-Bindungen enthält (-[Si-O]ₙ-, wobei n eine ganze Zahl größer 1 ist), und eine Pulverlackierung, mit der Maßgabe, dass die polare Beschichtung keinen elektrisch leitfähigen Zusatz, ausgewählt aus ionischen Verbindungen, Metallen, Metall(misch)oxiden, intermetallischen Verbindungen und leitfähigem Kohlenstoff, enthält. Die Pulverlackierung des pulverlackierten Kunststoff- oder Glasgegenstandes weist ausgezeichnete Eigenschaften wie gleichmäßige Schichtdicke der Pulverlackierung, ausgezeichnetes Erscheinungsbild und hohe Stabilität und Beständigkeit auf.

Durch die vorliegende Erfindung wird ein neuartiges effizientes Verfahren zum Pulverlackieren eines Kunststoff- oder Glasgegenstandes bereitgestellt, das kostengünstig, umweltfreundlich und einfach in bestehende Produktionsabläufe zu integrieren ist, und durch das ohne Verwendung eines leitfähigen Zusatzes eine Pulverlackierung mit hoher Qualität erzeugt werden kann. Darüber hinaus wird durch die vorliegende Erfindung ein pulverlackierter Kunststoff- oder Glasgegenstand bereitgestellt, dessen Pulverlackierung ausgezeichnete Eigenschaften, wie gleichmäßige Schichtdicke der Pulverlackierung, ausgezeichnetes Erscheinungsbild und hohe Stabilität/Beständigkeit aufweist.

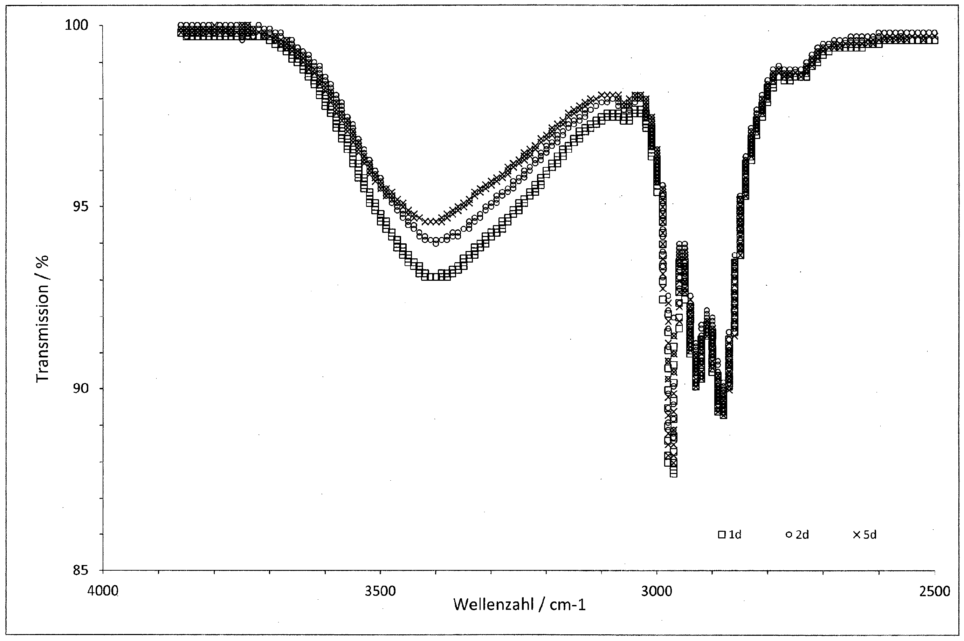

Figur 1 zeigt IR-Spektren einer frisch hergestellten Beschichtungslösung (r = 1,7) nach Altern für eine Dauer von einem, zwei und fünf Tagen. Es ist ersichtlich, dass der Wassergehalt langsam abnimmt.

Die nachstehenden Beispiele dienen als weitere Erläuterung der vorliegenden Erfindung, ohne darauf beschränkt zu sein.

### Beispiel 1

Unter Normalbedingungen wurden in einem Becherglas 0,1 mol (27,8 g) Glycidyloxypropyltriethoxysilan (GPTES) vorgelegt und mit 3,06 Salzsäure (0,1 N, bezogen auf die drei hydrolysierbaren Si-O-Bindungen von GPTES, entsprechend 0,003 mol HCl versetzt und gerührt. Innerhalb der ersten 30 Sekunden nach Zugabe der Salzsäure wurde ein Anstieg des pH-Wertes von anfänglich pH 1,5 bis 2 auf pH 4 beobachtet. Danach blieb der pH-Wert konstant. Nach 210 Sekunden war das GPTES vollständig in Lösung gegangen. Das Reaktionsgemisch wurde insgesamt für eine Stunde gerührt.

Anschließend wurde in verschiedenen Ansätzen jeweils 60 bzw. 80 Gew.-%, bezogen auf das Gewicht des eingesetzten GPTES, Ethanol zugegeben und für weitere fünf Minuten gerührt. Danach wurden die verschiedenen Ansätze jeweils für verschiedene Zeiten gealtert. Es wurden IR-Spektren von Lösungen mit unterschiedlichen Wasserkonzentrationen, ohne den Zusatz von Ethanol, aufgezeichnet.

Die jeweils für verschiedene Zeitdauern gealterten Beschichtungszusammensetzungen wurden mittels Sprühen auf PVC, PA6, PA12 bzw. PP-Substrate aufgetragen. Die Beschichtung der derart beschichteten Substrate wurde im Umluftofen für 1 Minute auf 120°C erhitzt. Nach dem Abkühlen der derart beschichteten Substrate auf Raumtemperatur wurde jeweils versucht, mittels eines Pulverlackiergeräts unter Koronaaufladung einen Pulverlack (Polyester/Epoxy-Mischpulver der Firma Beriyam) aufzubringen.

Dabei ergab sich, dass sich Beschichtungszusammensetzungen, die für weniger als 12 Stunden gealtert wurden, nicht dazu geeignet waren, eine polare pulverlackierbare Beschichtung auf einem Kunststoffgegenstand zu erzeugen, da der Pulverlack auf den entsprechend beschichteten Kunststoffgegenständen nur unregelmäßig haftete. Sehr gute Ergebnisse wurden für eine Alterungsdauer von 24 Stunden beobachtet. Nach vier Tagen Altern wurden ausgezeichnete Ergebnisse erzielt, die auch durch längere Alterungszeiten nicht verbessert werden konnten.

### Beispiel 2

Beispiel 2 wurde analog Beispiel 1 durchgeführt, wobei zuerst Ethanol und danach Salzsäure zugegeben wurden. Die erhaltenen Resultate entsprachen weitgehend denjenigen aus Beispiel 1.

### Beispiel 3

Beispiel 3 wurde analog Beispiel 1 durchgeführt, wobei folgende Rezeptur eingesetzt wurde:
GPTES Glycidyloxypropyltriethoxysilan (GPTES) : BPA (Bisphenol A): HIS (Histidin)
1 : 0,3 : 0,0025
0,02 : 0,006 : 0,00005 [mol]
5,56 : 1,3696 :0,0078 [g]

Bezogen auf das Stoffmengenverhältnis von 0,02 mol GPTES wurden 2,16 g 0,1 N Salzsäure gegeben, welches ein Verhältnis von Wasser:Si von r=6 ist. In diesen 2,16 g 0,1 N Salzsäure sind 0,000216 mol HCl enthalten. Es wurde ein höherer Gehalt von Wasser gewählt, da sich das Histidin eher schlecht löst.

HIS wurde in HCl unter Rühren gelöst, dann erfolgte die Zugabe von GPTES. Die Mischung wurde 1h gerührt.

Dann erfolgte die Zugabe von BPA. Nach Lösen des BPA erfolgte die Zugabe von Ethanol dergestalt, dass eine 40 Gew% Lösung, bezogen auf GPTES, erhalten wurde.

Es ist auch eine 20 Gew%-Lösung, bezogen auf GPTES, möglich.

### Beispiel 4

Unter Normalbedingungen wurden in einen Mischbehälter mit Magnetrührer 69,50 g 3-Glycidyloxypropyltriethoxysilan (GPTES) vorgelegt und mit 7,65 g Salzsäure (0,1 N) versetzt und 1 h gerührt, wobei der Magnetrührer derart eingestellt wurde, dass sich keine Luftbläschen bildeten. Anschließend wurden 193,2 g Ethanol zugegeben und für weitere fünf Minuten gerührt.

Die entsprechend gealterte Zusammensetzung wurde dann zur Beschichtung von Glasgegenständen mittels Sprühen eingesetzt.

### Beispiel 5

Beispiel 2 wurde analog Beispiel 1 durchgeführt, wobei folgende Rezeptur eingesetzt wurde:
69,50 g 3-Aminopropyltriethoxysilan
7,65 g Salzsäure (0,1 N)
193,2 g Ethanol

## Patentansprüche

1. Verfahren zum Pulverlackieren eines Kunststoff- oder Glasgegenstandes, umfassend die Schritte:
das Ausbilden einer polaren Beschichtung auf dem Kunststoff- oder Glasgegenstand, umfassend die Teilschritte
des Alterns einer Beschichtungszusammensetzung für eine Dauer von mindestens 12 Stunden und des Aufbringens der Beschichtungszusammensetzung auf den Kunststoff- oder Glasgegenstand,
das Aufbringen eines Pulverlacks auf den derartig beschichteten Kunststoff- oder Glasgegenstand und
das Erwärmen des Pulverlacks auf eine Temperatur von 100 bis 250°C,
wobei die Beschichtungszusammensetzung ein Organosiloxan, das mindestens zwei Si-O-Bindungen aufweist, Wasser, ein organisches Lösemittel und ein pH-regulierendes Mittel, ausgewählt aus einer Brönsted-Säure, in einer katalytischen Menge enthält,
mit der Maßgabe, dass die Beschichtungszusammensetzung keinen elektrisch leitfähigen Zusatz, ausgewählt aus ionischen Verbindungen, Metallen, Metall(misch)oxiden, intermetallischen Verbindungen und leitfähigem Kohlenstoff, enthält.

2. Verfahren nach Anspruch 1, wobei nach dem Altern und Aufbringen der Beschichtungszusammensetzung und vor dem Aufbringen des Pulverlacks die Beschichtungszusammensetzung für eine Dauer von 5 Sekunden bis 10 Minuten auf eine Temperatur von 80 bis 150°C erwärmt wird.

3. Verfahren nach Anspruch 1 oder 2, wobei das Altern der Beschichtungszusammensetzung für eine Dauer von mindestens 24 Stunden, vorzugsweise 48 Stunden, erfolgt.

4. Verfahren nach einem der Ansprüche 1 bis 3, wobei die Beschichtungszusammensetzung ein Fließhilfsmittel umfasst.

5. Verfahren nach einem der Ansprüche 1 bis 4, wobei das Erwärmen des Pulverlacks durch Anwenden von Infrarot- oder Ultraviolettstrahlung erfolgt.

6. Verfahren nach einem der Ansprüche 1 bis 4, wobei das Erwärmen des Pulverlacks im Umluftofen erfolgt.

7. Verfahren nach einem der Ansprüche 1 bis 6, wobei der Glasgegenstand mindestens ein Glas, ausgewählt aus der Gruppe, bestehend aus Borosilikatglas, Quarzglas, Kronglas, Kalk-Natron-Glas, Floatglas, Flintglas, Bleikristallglas, Kristallglas und Glaskeramik, umfasst.

8. Verfahren nach einem der Ansprüche 1 bis 6, wobei der Glasgegenstand ein Verbundwerkstoff, umfassend Glas, ist.

9. Verfahren nach einem der Ansprüche 1 bis 6, wobei der Kunststoffgegenstand mindestens einen Kunststoff, ausgewählt aus der Gruppe, bestehend aus aus Polyamid, Polyurethan, Polyethylenterephthalat, Polyolefin, Polystyrol, Acrylnitril-Butadien-Styrol-Terpolymer (ABS), Polybutylenterephthalat (PBT), Polyethylenterephthalat (PET), Polycarbonat (PC), Polyoxymethylen (POM), Polyvinylchlorid (PVC) und Polymethylmethacrylat (PMMA) sowie Blends daraus, umfasst, wobei der Kunstsfoff gegebenenfalls ein kohlefaser- und/oder graphit- und/oder glasfaserverstärkter Kunststoff ist.

10. Verfahren nach einem der Ansprüche 1 bis 7, wobei der Kunststoffgegenstand ein Holz-Kunststoff-Verbundwerkstoff ist.

11. Verfahren nach einem der Ansprüche 1 bis 10, wobei die Beschichtungszusammensetzung 0,5 bis 10 Gew.-% eines Verlaufshilfsmittels umfasst.

12. Verfahren gemäß Anspruch 11, wobei das Verlaufshilfsmittel aus Kaolin, Talkum und/oder Feldspat, vorzugsweise aus Kaolin, ausgewählt ist.

13. Pulverlackierter Kunststoff- oder Glasgegenstand, umfassend in dieser Reihenfolge von innen nach außen,
einen Kunststoff- oder Glasgegenstand,
eine polare Beschichtung, umfassend ein Polyorganosiloxan, welches Wiederholungseinheiten mit mindestens zwei Si-O-Bindungen enthält, und eine Pulverlackierung,
mit der Maßgabe, dass die polare Beschichtung keinen elektrisch leitfähigen Zusatz, ausgewählt aus ionischen Verbindungen, Metallen, Metall(misch)oxiden, intermetallischen Verbindungen und leitfähigem Kohlenstoff, enthält.

## Claims

1. A method for powder coating a plastic or glass article, comprising the following steps:
the forming of a polar coating on the plastic or glass article, comprising the substeps
of aging a coating composition for a duration of at least 12 hours and of applying the coating composition to the plastic or glass article,
the applying of a powder coating material to the thus-coated plastic or glass article, and
the heating of the powder coating material to a temperature of 100 to 250°C,
wherein the coating composition comprises an organosiloxane having at least two Si-O bonds, water, an organic solvent, and a pH regulator, selected from a Bronsted acid, in a catalytic amount,
with the proviso that the coating composition contains no electrically conductive additive selected from ionic compounds, metals, (mixed) metal oxides, intermetallic compounds, and conductive carbon.

2. The method as claimed in claim 1, wherein the coating composition, after the aging and applying of the composition and before the applying of the powder coating material, is heated to a temperature of 80 to 150°C for a duration of 5 seconds to 10 minutes.

3. The method as claimed in claim 1 or 2, wherein the aging of the coating composition takes place for a duration of at least 24 hours, preferably 48 hours.

4. The method as claimed in any of claims 1 to 3, wherein the coating composition comprises a flow assistant.

5. The method as claimed in any of claims 1 to 4, wherein the heating of the powder coating material takes place by use of infrared or ultraviolet radiation.

6. The method as claimed in any of claims 1 to 4, wherein the heating of the powder coating material takes place in a forced air oven.

7. The method as claimed in any of claims 1 to 6, wherein the glass article comprises at least one glass selected from the group consisting of borosilicate glass, fused quartz, crown glass, lime-soda glass, float glass, flint glass, lead-crystal glass, crystal glass, and glass-ceramic.

8. The method as claimed in any of claims 1 to 6, wherein the glass article is a composite material comprising glass.

9. The method as claimed in any of claims 1 to 6, wherein the plastic article comprises at least one plastic selected from the group consisting of polyamide, polyurethane, polyethylene terephthalate, polyolefin, polystyrene, acrylonitrile-butadiene-styrene terpolymer (ABS), polybutylene terephthalate (PBT), polyethylene terephthalate (PET), polycarbonate (PC), polyoxymethylene (POM), polyvinyl chloride (PVC), and polymethyl methacrylate (PMMA), and also blends thereof, the plastic optionally being a carbon fiber-reinforced and/or graphite-reinforced and/or glass fiber-reinforced plastic.

10. The method as claimed in any of claims 1 to 7, wherein the plastic article is a wood-plastic composite material.

11. The method as claimed in any of claims 1 to 10, wherein the coating composition comprises 0.5 to 10 wt% of a leveling assistant.

12. The method as claimed in claim 11, wherein the leveling assistant is selected from kaolin, talc and/or feldspar, preferably from kaolin.

13. A powder-coated plastic or glass article comprising in this order, from inside to outside:
a plastic or glass article,
a polar coating comprising a polyorganosiloxane which contains repeating units having at least two Si-O bonds, and
a powder coating,
with the proviso that the polar coating contains no electrically conductive additive selected from ionic compounds, metals, (mixed) metal oxides, intermetallic compounds, and conductive carbon.

## Revendications

1. Procédé permettant de recouvrir d'une laque en poudre un objet en matière plastique ou en verre, comprenant les étapes suivantes :
- formation d'un revêtement polaire sur l'objet en matière plastique ou en verre, comprenant les étapes partielles suivantes :
- vieillissement d'une composition de revêtement pour une durée d'au moins 12 heures, et application de la composition de revêtement sur l'objet en matière plastique ou en verre,
- application d'une laque en poudre sur l'objet en matière plastique ou en verre ainsi revêtu, et
- chauffage de la laque en poudre à une température de 100 à 250°C,
dans lequel la composition de revêtement contient un organosiloxane présentant au moins deux liaisons Si-O, de l'eau, un solvant organique et un régulateur de pH sélectionné à partir d'un acide de Brønsted, dans une quantité catalytique,
à condition que la composition de revêtement ne contienne pas d'adjuvant électriquement conducteur, sélectionné à partir de liaisons ioniques, de métaux, d'oxydes (mixtes) de métaux, de liaisons intermétalliques et de carbone conducteur.

2. Procédé selon la revendication 1, dans lequel, après le vieillissement et l'application de la composition de revêtement et avant l'application de la laque en poudre, la composition de revêtement est chauffée pour une durée de 5 secondes à 10 minutes, à une température de 80 à 150°C.

3. Procédé selon la revendication 1 ou 2, dans lequel le vieillissement de la composition de revêtement est réalisé pour une durée d'au moins 24 heures, de préférence de 48 heures.

4. Procédé selon l'une des revendications 1 à 3, dans lequel la composition de revêtement comporte un adjuvant d'écoulement.

5. Procédé selon l'une des revendications 1 à 4, dans lequel le chauffage de la laque en poudre est réalisé à l'aide d'un rayonnement infrarouge ou ultraviolet.

6. Procédé selon l'une des revendications 1 à 4, dans lequel le chauffage de la laque en poudre est réalisé dans un four à chaleur tournante.

7. Procédé selon l'une des revendications 1 à 6, dans lequel l'objet en verre comporte au moins un verre, sélectionné à partir du groupe comprenant le verre borosilicaté, le verre de quartz, le verre crown, le verre sodocalcique, le verre flotté, le verre flint, le verre de cristal au plomb, le verre de cristal et la céramique de verre.

8. Procédé selon l'une des revendications 1 à 6, dans lequel l'objet en verre est un matériau composite comportant du verre.

9. Procédé selon l'une des revendications 1 à 6, dans lequel l'objet en matière plastique comporte au moins une matière plastique sélectionnée à partir du groupe comprenant le polyamide, le polyuréthane, le polytéréphtalate d'éthylène, le polyoléfine, le polystyrène, un terpolymère d'acrylonitrile-butadiène-styrène (ABS), le polytéréphtalate de butylène (PBT), le polytéréphtalate d'éthylène (PET), le polycarbonate (PC), le polyoxyméthylène (POM), le chlorure de polyvinyle (PVC) et le polyméthacrylate de méthyle (PMMA), ainsi que des combinaisons de ceux-ci, la matière plastique étant le cas échéant une matière plastique renforcée avec des fibres de carbone et/ou de graphite et/ou de verre.

10. Procédé selon l'une des revendications 1 à 7, dans lequel l'objet en matière plastique est un matériau composite à base de bois et de matière plastique.

11. Procédé selon l'une des revendications 1 à 10, dans lequel la composition de revêtement comporte de 0,5 à 10% en poids d'agent fluidifiant.

12. Procédé selon la revendication 11, dans lequel l'agent fluidifiant est sélectionné parmi le kaolin, le talc et/ou le Feldspath, de préférence du kaolin.

13. Objet en matière plastique ou en verre recouvert d'une laque en poudre, comportant, dans cet ordre, de l'intérieur vers l'extérieur :
- un objet en matière plastique ou en verre,
- un revêtement polaire, comportant du poly-organosiloxane contenant des unités de répétition avec au moins deux liaisons Si-0, et
- une laque en poudre,
à condition que le revêtement polaire ne contienne pas d'adjuvant électriquement conducteur, sélectionné parmi des liaisons ioniques, des métaux, des oxydes (mixtes) de métaux, des liaisons intermétalliques et du carbone conducteur.
